(19) Europäisches Patentamt
European Patent Office
Office européen des brevets

(11) Veröffentlichungsnummer: **0 071 576**
**B1**

(12) # EUROPÄISCHE PATENTSCHRIFT

(45) Veröffentlichungstag der Patentschrift: **23.01.85**

(51) Int. Cl.⁴: **C 09 B 1/54**

(21) Anmeldenummer: **82810318.4**

(22) Anmeldetag: **26.07.82**

(54) **Verfahren zur Herstellung von 1-Amino-4-hydroxy-anthrachinonen.**

(30) Priorität: **30.07.81 CH 4943/81**

(43) Veröffentlichungstag der Anmeldung: **09.02.83 Patentblatt 83/6**

(45) Bekanntmachung des Hinweises auf die Patenterteilung: **23.01.85 Patentblatt 85/4**

(84) Benannte Vertragsstaaten: **CH DE FR GB IT LI**

(56) Entgegenhaltungen:
**EP - A - 0 016 432**
**DE - A - 1 619 602**
**FR - A - 2 260 562**
**GB - A - 834 949**
**GB - A - 1 085 685**

**CHEMICAL ABSTRACTS, Band 84, Nr. 18, 3. Mai 1976, Seite 82, Nr. 123401y, Columbus, Ohio, USA**
**CHEMICAL ABSTRACTS, Band 94, Nr. 1, 5. Januar 1981, Seite 321, Nr. 3396k, Columbus, Ohio, USA**

(73) Patentinhaber: **CIBA-GEIGY AG, Postfach, CH-4002 Basel (CH)**

(72) Erfinder: **Kniel, Paul, Dr., Gartenstrasse 92, CH-4132 Muttenz (CH)**

**EP 0 071 576 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

**Beschreibung**

Die Erfindung betrifft ein Verfahren zur Herstellung von 1-Amino-4-hydroxy-2-phenoxy- oder -2-alkoxy-anthrachinonen.

Diese Verbindungen sind schon seit längerem bekannt und einige von ihnen stellen wertvolle Dispersionsfarbstoffe für das Färben von Textilmaterial aus Polyester dar.

Die 1-Amino-2-alkoxy-4-hydroxyanthrachinonverbindungen werden gemäß der DE-AS 2 405 782 z. B. hergestellt, indem man einen primären Alkohol mit 1-Amino-2-chlor-4-hydroxyanthrachinon in Gegenwart von Phenol, alkalisch wirkenden Mitteln und Polyäthylenglykolen umsetzt, wobei man entweder überschüssigen Alkohol als Lösungsmittel verwendet oder ein weiteres Lösungsmittel, vorzugsweise ein polares aprotisches, wie N-Methylpyrrolidon, Dimethylformamid, Dimethylsulfoxid oder Dimethylsulfon, zusetzt. Die genannten Lösungsmittel sind jedoch für die Herstellung der 1-Amino-2-alkoxy-4-hydroxyanthrachinone in größeren Mengen nicht optimal, da ihre Beständigkeit, insbesondere bei hohen Temperaturen, zu wünschen übrig läßt und ihre Regeneration verhältnismäßig aufwendig ist.

Die 1-Amino-2-phenoxy-4-hydroxyanthrachinone erhält man gemäß der europ. Anmeldung 16 432, wenn man 1-Amino-2-chlor-4-hydroxyanthrachinon in wäßrigem Medium bei 120—150°C mit einem Phenol in Gegenwart eines Phasentransferkatalysators umsetzt. Dieses Verfahren erfordert druckfeste Apparaturen und einen großen Überschuß an Phenolen, die nach der Reaktion aus den wäßrigen Filtraten durch aufwendige Maßnahmen entfernt werden müssen.

Aufgabe der vorliegenden Erfindung war es, ein verbessertes Verfahren zur Herstellung von 1-Amino-4-hydroxy-2-alkoxy- oder -2-phenoxy-anthrachinonen zu finden, welches die obenerwähnten Nachteile der bekannten Verfahren möglichst weitgehend beseitigt.

Diese Aufgabe wird durch das erfindungsgemäße Verfahren gelöst. Es läßt sich in beständigeren und leichter zu regenerierenden Lösungsmitteln, wie z. B. Chlorbenzol, Nitrobenzol oder Ehtylenglykolethern durchführen, ein großer Überschuß an Phenol ist nicht erforderlich und auf druckfeste Apparaturen kann verzichtet werden.

Gegenstand der vorliegenden Erfindung ist ein Verfahren zur Herstellung von 1-Amino-4-hydroxy-anthrachinonen der Formel 1

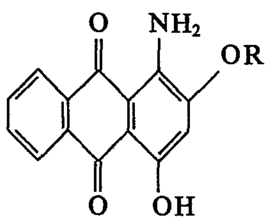

(1)

worin R einen gegebenenfalls durch Chlor, Brom, $C_1—C_4$-Alkyl oder $C_1—C_4$-Alkoxy substituierten Phenylrest oder den Rest eines Alkohols bedeutet, durch Umsetzung einer Verbindung der Formel 2

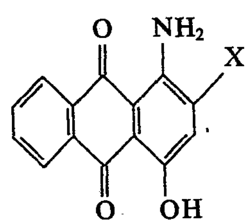

(2)

worin X Chlor oder Brom bedeutet, mit einer Verbindung ROH, worin R die oben angegebene Bedeutung aufweist, in Gegenwart eines alkalisch wirkenden Mittels, dadurch gekennzeichnet, daß man die Umsetzung in einem organischen Lösungsmittel in Gegenwart eines quartären Ammoniumsalzes, einer Phosphoniumverbindung oder eines Kronenethers als Phasentransferkatalysator durchführt.

Als Verbindungen ROH kommen Phenole oder Alkohole in Frage.

Bei den Phenolen handelt es sich z. B. um 2-, 3- oder 4-Chlorphenol, 4-Bromphenol, 2,4-Dichlorphenol, o-, m- oder p-Kresol, die Xylenole, wie z. B. 2,4-Dimethylphenol, 4-Äthylphenol, 4-Isopropylphenol, 4-tert.-Butylphenol oder 4-Hydroxyanisol, vorzugsweise aber um Phenol.

Als Alkohole für das erfindungsgemäße Verfahren eignen sich z. B. die folgenden Verbindungen: Butanol-1, Amylalkohol, Hexanol-1, Heptanol-1, Octanol-1, Decylalkohol, Laurylalkohol, Stearylalkohol, Palmitylalkohol, 2-Äthylhexanol-1, Benzylalkohol, 2-Phenylethanol, 3-Phenylpropanol. Vorzugsweise werden jedoch Glykole oder Glykolether eingesetzt, beispielsweise die folgenden: Ethylenglykol, 1,2- oder 1,3-Propylenglykol, Butandiol-1,3, Butandiol-1,4, 3-Methylbutandiol-1,3, Pentandiol-1,5, Hexandiol-1,6, Octandiol-1,8, Neopentylglykol, 2-Phenoxyethanol, o-, m- oder p-Kresoxyethanol, 3-Phenoxypropanol, m- oder p-Kresoxypropanol, Ethylenglykolmonomethylether, Ethylenglykolmonoethylether, Diethylenglykol, Triethylenglykol, Diethylenglykolmonomethylether, -monoethylether

oder -monohexylether, Triethylenglykolmonomethylether.

Besonders bevorzugt unter diesen Verbindungen sind Hexandiol-1,6, Ethylenglykol, Diethylenglykolmonomethylether, Phenoxyethanol sowie m- oder p-Kresoxyethanol, 3-Phenoxypropanol sowie m- oder p-Kresoxypropanol.

Die Phenole werden im allgemeinen in einer Menge von 1 bis 1,5 Mol, vorzugsweise 1,1 bis 1,2 Mol, je Mol der eingesetzten Anthrachinonverbindung der Formel (2), verwendet und die Alkohole in einer Menge von 2 bis 10, vorzugsweise 2 bis 4 Mol. Bei der Umsetzung der 1-Amino-4-hydroxy-2-halogenanthrachinonverbindung der Formel (2) mit einem Alkohol führt man die Umsetzung vorzugsweise in Gegenwart von ca. 0,5—1 Mol eines Phenols je Mol Anthrachinonverbindung durch. Als Phenol kommt vor allem das unsubstituierte Phenol selbst in Betracht sowie die Kresole, die Xylenole oder Chlorphenole.

Als alkalisch wirkende Mittel kommen für die Reaktion z. B. Alkalimetallhydroxide, wie Natriumhydroxid, Kaliumhydroxid, Alkalimetallcarbonate, wie Natriumhydrogencarbonat, Kaliumhydrogencarbonat, Natriumcarbonat, Kaliumcarbonat und Gemische dieser Verbindungen in Betracht. Von den genannten Verbindungen sind Kaliumhydroxid und vor allem Kaliumhydrogencarbonat und Kaliumcarbonat besonders bevorzugt.

Als Lösungsmittel kommen für das erfindungsgemäße Verfahren aprotische unpolare Lösungsmittel mit einem Siedepunkt oberhalb 110°C in Frage. Vorzugsweise handelt es sich um Halogenbenzole, wie Chlorbenzol, Brombenzol, Dichlorbenzol, Trichlorbenzol, Chlortoluol, um Alkylbenzole, wie Toluol, o-, m- oder p-Xylol oder Äthylbenzol, um Nitrobenzole, wie Nitrobenzol oder Nitrotoluol, sowie um Glykoldiether, wie z. B. Ethylenglykoldiethylether, Diethylenglykoldimethylether oder -diethylether oder Triethylenglykoldimethylether. Besonders bevorzugt sind von diesen Chlorbenzol, Nitrobenzolo-Dichlorbenzol, Toluol, Xylol, Diethylenglykoldimethylether und -diethylether.

Geeignete Phasentransferkatalysatoren für das erfindungsgemäße Verfahren sind:

Quartäre Ammonium- oder Phosphoniumverbindungen der Formel (3)

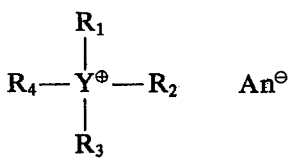

(3)

worin $R_1—R_4$ unabhängig voneinander je einen nieder- oder hochmolekularen organischen Rest, insbesondere einen gegebenenfalls substituierten Alkyl-, Cycloalkyl- oder Arylrest, Y Stickstoff oder Phosphor und $An^{\ominus}$ ein Anion bedeuten.

Besonders bewährt haben sich quartäre Ammoniumsalze der angegebenen Formel (Y=N), in der $R_1$, $R_2$ und $R_3$ unabhängig voneinander je $C_1—C_{18}$-Alkyl und $R_4$ $C_1—C_{18}$-Alkyl, Benzyl oder Phenyl bedeuten.

Ganz besonders bevorzugt sind quartäre Ammoniumsalze der angegebenen Formel, in der $R_1$, $R_2$ und $R_3$ je $C_1—C_8$-Alkyl darstellen, und $R_4$ $C_1—C_{18}$-Alkyl oder Benzyl bedeutet.

Geeignete Alkylreste sind z. B. $C_1—C_{18}$-Alkylreste wie der Methyl-, Äthyl-, Propyl-, n-Butyl-, Hexyl-Octyl-, Dodecyl- und Octadecylrest und durch einen Hydroxy-, Cyan- oder Phenylrest substituierte $C_1—C_{18}$-Alkylreste, wie der 2-Hydroxyethyl-, 2-Hydroxypropyl-, 2-Cyanethyl- oder 2-Phenylethylrest.

Als Cycloalkylreste $R_1—R_4$ kommen vor allem $C_5—C_6$-Cycloalkylreste, wie der Cyclopentyl und der Cyclohexylrest und die durch $C_1—C_4$-Alkylgruppen substituierten Cyclopentyl- und Cyclohexylreste, in Betracht.

Als geeignete Arylreste kommen vor allem die durch $C_1—C_4$-Alkylreste substituierten Phenylreste in Frage.

Als Anion $An^{\ominus}$ kommen vor allem Halogenidionen, insbesondere $Cl^{\ominus}$, sowie das Hydrogensulfation in Betracht.

Erfindungsgemäß verwendbare quaternäre Ammoniumverbindungen sind z. B.

Tetrabutylammoniumbromid oder -chlorid, Dodecyltrimethylammoniumchlorid,
n-Hexadecyltributylammoniumchlorid, Tetrapropylammoniumchlorid,
Benzyltriethylammoniumchlorid, Benzyltributylammoniumbromid,
Benzyltrihexylammoniumbromid, Benzyltrioctylammoniumbromid, Tetrabutylammoniumjodid,
Trioctylmethylammoniumchlorid, N-Octylpyridiniumbromid, N-Dodecylpyridiniumbromid,
Cyclohexyltriethylammoniumbromid, n-Dodecyltriethylammoniumbromid,
n-Octyltributylammoniumbromid, n-Hexadecyltrimethylammoniumbromid,
n-Hexadecyltriethylammoniumbromid, n-Hexadecyltripropylammoniumbromid,
n-Dodexyl-bis-($\beta$-hydroxyethyl)-benzylammoniumchlorid und
n-Hexadecyl-tri-($\beta$-hydroxyethyl)-ammoniumchlorid.

Geeignete Phosphoniumverbindungen sind z. B. n-Hexadecyltributylphosphoniumbromid, Tetrabutylphosphoniumchlorid, Tetraphenylphosphoniumbromid oder Trioctylethylphosphoniumbromid.

Als Phasentransferkatalysatoren kommen außerdem Kronenether in Frage, z. B. 18-Krone-6, Dibenzo-18-krone-6 oder Dicyclohexano-18-krone-6.

Bevorzugte Katalysatoren sind: Tetrabutylammoniumbromid oder -chlorid, n-Hexadecyltributylammoniumchlorid, Tetrapropylammoniumchlorid, Benzyltributylammoniumbromid bzw. -chlorid, Trioctylmethylammoniumbromid bzw. -chlorid.

Die erforderliche Menge an Phasentransferkatalysatoren kann in weiten Grenzen schwanken. Im allgemeinen haben sich Mengen von 0,1 bis 50 Gew.-%, vorzugsweise 1—20 Gew.-%, bezogen auf das Gewicht des 1-Amino-4-hydroxy-2-halogenanthrachinons, bewährt.

Das Verfahren kann beispielsweise derart durchgeführt werden, daß man das Anthrachinon im Lösungsmittel löst, den Phasentransferkatalysator und das Phenol bzw. den Alkohol sowie die alkalisch wirkende Verbindung zusetzt und anschließend während etwa 2—30 Stunden auf 110—180°C erhitzt.

Nach Beendigung der Umsetzung wird das Reaktionsgemisch in an sich bekannter Weise aufgearbeitet, z. B. durch Verdünnen mit niedrigen aliphatischen Alkoholen, wie Ethanol, Propanol oder vorzugsweise Methanol, wobei das Verfahrensprodukt ausgefüllt wird. Dieses wird dann in bekannter Weise isoliert.

Die folgenden Beispiele dienen der Erläuterung der Erfindung. Darin bedeuten Prozente Gewichtsprozente und die Temperaturen sind in Grad Celsius angegeben.

## Beispiel 1

29,75 g 1-Amino-2-chlor-4-hydroxyanthrachinon (Titer 92%), 120 ml Chlorbenzol, 5 g Tetrabutylammoniumbromid, 10,8 g Phenol und 6,48 g Kaliumhydroxid werden inert 1 Std. unter Rühren auf Siedetemperatur (131—133°) erhitzt und dann 5 Std. bei Siedetemperatur gerührt. Dabei auftretendes Reaktionswasser wird zusammen mit ca. 10 ml Chlorbenzol seitlich abdestilliert. Nach Abkühlen auf 60° wird der Ansatz mit 50 ml Methanol versetzt, bei Raumtemperatur filtriert, mit Methanol und Wasser gewaschen und getrocknet. Man erhält 29,9 g 1-Amino-4-hydroxy-2-phenoxyanthrachinon, entsprechend einer Ausbeute von 90,3% der Theorie. Das Produkt färbt Polyester genau gleich wie Handelsware, hergestellt aus 1-Amino-2-chlor-4-hydroxyanthrachinon in Phenol bei Gegenwart von Phenolat.

## Beispiel 2
(Vergleichsbeispiel)

Beispiel 1 wird ohne Zusatz von Tetrabutylammoniumbromid wiederholt. Das isolierte Produkt besteht aus nicht umgesetztem 1-Amino-2-chlor-4-hydroxyanthrachinon.

## Beispiel 3

a) Man verfährt wie im Beispiel 1, verwendet jedoch anstelle von Phenol 12,5 g 1,4-Kresol. Man erhält 30,5 g (88,3% der Theorie) reines 1-Amino-4-hydroxy-2-(4'-methylphenoxy)-anthrachinon.

b) Das gleiche Ergebnis wie unter a) wird erhalten, wenn statt Tetrabutylammoniumbromid 5 g des Kronenethers 18-Krone-6 als Phasentransferkatalysator eingesetzt werden.

## Beispiel 4

Man verfährt wie im Beispiel 1, verwendet jedoch anstelle von Phenol 14,3 g 4-Methoxyphenol und anstelle von Tetrabutylammoniumbromid 5 g Hexadecyl-tributylphosphoniumbromid. Man erhält 33,2 g (91,9% der Theorie) reines 1-Amino-4-hydroxy-2-(4'-methoxyphenoxy)-anthrachinon.

## Beispiel 5

a) 30,1 g 1-Amino-2-chlor-4-hydroxyanthrachinon (Titer 91%), 30 ml Nitrobenzol, 5 g Methyltrioctylammoniumchlorid, 10,4 g Phenol, 39 g 1,6-Hexandiol und 13,2 g Kaliumcarbonat werden auf 150° erhitzt und 8 Std. bei 150—153° gerührt. Der Ansatz wird mit 95 ml Methanol versetzt, bei Raumtemperatur filtriert, mit Methanol und Wasser gewaschen und getrocknet. Man erhält 29,8 g 1-Amino-4-hydroxy-2-(6'-hydroxyhexoxy)-anthrachinon, entsprechend einer Ausbeute von 83,8% der Theorie. Die färberischen Eigenschaften des Produktes stimmen mit denjenigen von Handelsware, die auf übliche Weise hergestellt wurde, überein.

b) Das gleiche Ergebnis wie unter a) wird erhalten, wenn anstelle von Nitrobenzol 1,2-Dichlorbenzol oder Diethyldiglykol (Diethylenglykoldiethylether) verwendet wird.

### Beispiel 6
(Vergleichsbeispiel)

Beispiel 5 wird ohne Zusatz von Methyltrioctylammoniumchlorid wiederholt. Das isolierte Produkt enthält außer der gewünschten Verbindung mehr als 30% Nebenprodukte.

### Beispiel 7

Man verfährt wie im Beispiel 5, verwendet jedoch anstelle von 1,6-Hexandiol 45,6 g 2-Phenoxyethanol. Man erhält 35,2 g (93,7% der Theorie) reines 1-Amino-4-hydroxy-2-(2'-phenoxyethoxy)-anthrachinon.

### Beispiel 8

27,4 g 1-Amino-2-chlor-4-hydroxyanthrachinon (Titer 96%), 48 g Diethyldiglykol, 5 g Methyltrioctylammoniumchlorid, 2,4 g Phenol, 94 g Glykol und 12 g Kaliumcarbonat werden in einer Stickstoffatmosphäre unter Rühren 6 Std. auf 120—125° C erhitzt. Der Ansatz wird bei 60° mit 90 g Methanol und 11 g Essigsäure versetzt, bei Raumtemperatur filtriert, mit Methanol und Wasser gewaschen und getrocknet. Man erhält 24,5 g 1-Amino-4-hydroxy-2-(2'-hydroxyethoxy)-anthrachinon, entsprechend einer Ausbeute von 85,2% der Theorie. Das Produkt entspricht der nach dem Stand der Technik in überschüssigem Glykol ohne weiteres Lösungsmittel hergestellten Handelsware (BP 1 085 685).

### Beispiel 9

a) 27,4 g 1-Amino-2-chlor-4-hydroxyanthrachinon (Titer 96%), 44 g Nitrobenzol, 5 g Methyltrioctylammoniumchlorid, 9,4 g Phenol, 60 g Diethylenglykolmethylether und 12 g Kaliumcarbonat werden unter Rühren 6 Std. auf 150—153° erhitzt. Der Ansatz wird bei 60° mit 90 g Methanol versetzt, bei Raumtemperatur filtriert, mit Methanol und Wasser gewaschen und getrocknet. Man erhält 23,2 g reines 1-Amino-4-hydroxy-2-[2-(2-methoxyethoxy)ethoxy]-anthrachinon, entsprechend einer Ausbeute von 67,6% der Theorie.

b) Das gleiche Ergebnis wie unter a) wird erhalten, wenn statt Methyltrioctylammoniumchlorid 5 g des Kronenethers 18-Krone-6 als Phasentransferkatalysator eingesetzt werden.

### Beispiel 10

Man verfährt wie im Beispiel 1, verwendet jedoch anstelle von Phenol 14,8 g p-Chlorphenol und arbeitet im übrigen wie im Beispiel 1 beschrieben. Man erhält 1-Amino-4-hydroxy-2-(4'-chlorphenoxy)-anthrachinon, das Polyestermaterial rot färbt.

### Beispiel 11

Man verfährt wie in Beispiel 5, verwendet jedoch anstelle von 1,6-Hexandiol ein Gemisch von 15,2 g 2-Phenoxyethanol, 16,7 g 2-(m-Kresoxy)-ethanol und 16,7 g 2-(p-Kresoxy)-ethanol. Man erhält 33,35 g (86,8% der Theorie) eines Farbstoffes, der aus drei reinen Komponenten besteht, nämlich 1-Amino-4-hydroxy-2-(2'-phenoxyethoxy)-anthrachinon-, 1-Amino-4-hydroxy-2-[2'-(m-kresoxyethoxy)]-anthrachinon und 1-Amino-4-hydroxy-2-[2'-(p-kresoxyethoxy)]-anthrachinon.

## Patentansprüche

1. Verfahren zur Herstellung von 1-Amino-4-hydroxy-anthrachinonen der Formel 1

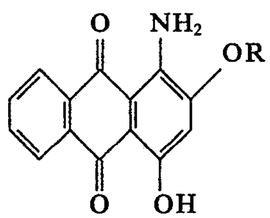

(1)

worin R einen gegebenenfalls durch Chlor, Brom, $C_1-C_4$-Alkyl oder $C_1-C_4$-Alkoxy substituierten Phenylrest oder den Rest eines Alkohols bedeutet, durch Umsetzung einer Verbindung der Formel 2

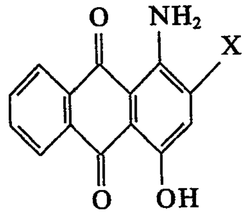

(2)

worin X Chlor oder Brom bedeutet, mit einer Verbindung ROH, worin R die oben angegebene Bedeutung aufweist, in Gegenwart eines alkalisch wirkenden Mittels, dadurch gekennzeichnet, daß man die Umsetzung in einem organischen Lösungsmittel in Gegenwart eines quartären Ammoniumsalzes, einer Phosphoniumverbindung oder eines Kronenethers als Phasentransferkatalysator durchführt.

2. Verfahren gemäß Anspruch 1, dadurch gekennzeichnet, daß man als Phenol das unsubstituierte Phenol einsetzt.

3. Verfahren gemäß Anspruch 1, dadurch gekennzeichnet, daß man als Alkohol Hexandiol-1,6, Ethylenglykol, Diethylenglykolmonomethylether, Phenoxyethanol oder m- oder p-Kresoxyethanol einsetzt.

4. Verfahren gemäß Ansprüchen 1 oder 3, dadurch gekennzeichnet, daß man die Umsetzung mit dem Alkohol in Gegenwart eines Phenols durchführt.

5. Verfahren gemäß Ansprüchen 1 oder 2, dadurch gekennzeichnet, daß man 1—1,5 Mol, vorzugsweise 1,1—1,2 Mol Phenol je Mol Anthrachinonverbindung der Formel (2) einsetzt.

6. Verfahren gemäß Ansprüchen 1 oder 3, dadurch gekennzeichnet, daß man 2—10 Mol, vorzugsweise 2—4 Mol Alkohol, je Mol Anthrachinonverbindung der Formel (2) einsetzt.

7. Verfahren gemäß Ansprüchen 4 und 6, dadurch gekennzeichnet, daß man die Umsetzung mit dem Alkohol in Gegenwart von 0,5—1 Mol eines Phenols je Mol Anthrachinonverbindung der Formel (2) durchführt.

8. Verfahren gemäß Ansprüchen 1—7, dadurch gekennzeichnet, daß man als organisches Lösungsmittel ein Halogenbenzol, Alkylbenzol, Nitrobenzol oder einen Glykolether verwendet.

9. Verfahren gemäß Anspruch 8, dadurch gekennzeichnet, daß man Chlorbenzol, o-Dichlorbenzol, Nitrobenzol, Toluol, Xylol, Diethylenglykoldimethylether oder Diethylenglykoldiethylether verwendet.

10. Verfahren gemäß einem der Ansprüche 1—9, dadurch gekennzeichnet, daß man als Phasentransferkatalysator eine quartäre Ammonium- oder Phosphoniumverbindung der Formel (3)

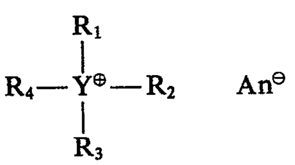

(3)

verwendet, worin $R_1-R_4$ unabhängig voneinander je einen nieder- oder hochmolekularen organischen Rest, insbesondere einen gegebenenfalls substituierten Alkyl-, Cycloalkyl- oder Arylrest, Y Stickstoff oder Phosphor und $An^{\ominus}$ ein Anion bedeuten.

11. Verfahren gemäß Anspruch 10, dadurch gekennzeichnet, daß man eine quartäre Ammoniumverbindung der Formel (3) verwendet, in der $R_1$, $R_2$ und $R_3$ unabhängig voneinander je $C_1-C_{18}$-Alkyl und $R_4$ $C_1-C_{18}$-Alkyl, Benzyl oder Phenyl bedeuten.

12. Verfahren gemäß Anspruch 11, dadurch gekennzeichnet, daß man eine quartäre Ammoniumverbindung der Formel (3) verwendet, in der $R_1$, $R_2$ und $R_3$ unabhängig voneinander je $C_1-C_8$-Alkyl und $R_4$ $C_1-C_{18}$-Alkyl oder Benzyl bedeuten.

13. Verfahren gemäß Anspruch 12, dadurch gekennzeichnet, daß man Tetrabutylammoniumbromid oder -chlorid, n-Hexadecyltributylammoniumchlorid, Tetrapropylammoniumchlorid, Benzyltributylammoniumbromid bzw. -chlorid oder Trioctylmethylammoniumbromid bzw. -chlorid verwendet.

14. Verfahren gemäß Anspruch 1, dadurch gekennzeichnet, daß man 1-Amino-2-chlor-4-hydroxyanthrachinon mit 1—1,5 Mol Phenol je Mol Anthrachinon in einem Lösungsmittel ausgewählt aus Chlorbenzol, o-Dichlorbenzol, Nitrobenzol, Toluol, Xylol, Diethylenglykoldimethylether oder Diethylenglykoldiethylether in Gegenwart von Tetrabutylammoniumbromid oder -chlorid, n-Hexadecyltributylammoniumchlorid, Tetrapropylammoniumchlorid, Benzyltributylammoniumbromid bzw. -chlorid oder Trioctylmethyl-ammoniumbromid bzw. -chlorid umsetzt.

**Claims**

1. A process for producing a 1-amino-4-hydroxy-anthraquinone of the formula 1

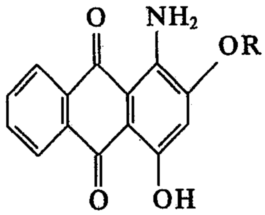

(1)

wherein R is a phenyl group which is unsubstituted or substituted by chlorine, brom, $C_1-C_4$-alkyl or $C_1-C_4$-alkoxy, or it is the radical of an alcohol, by reaction of a compound of the formula 2

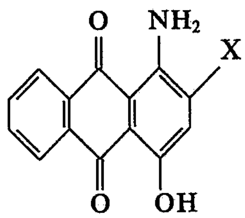

(2)

wherein X is chlorine or bromine, with a compound ROH, in which R has the meaning defined above, in the presence of an alkaline-acting agent, in which process the reaction is carried out in an organic solvent, in the presence of a quaternary ammonium salt, a phosphonium compound or a crown ether, as phase-transfer catalyst.

2. A process according to Claim 1, wherein the phenol used is the unsubstituted phenol.

3. A process according to Claim 1, wherein the alcohol used is hexanediol-1,6, ethylene glycol, diethylene glycol monomethyl ether, phenoxyethanol or m- or p-cresoxyethanol.

4. A process according to Claim 1 or 3, wherein the reaction with the alcohol is performed in the presence of a phenol.

5. A process according to Claim 1 or 2, wherein there are used 1—1.5 mols, preferably 1.1—1.2 mols, of phenol per mol of an anthraquinone compound of the formula (2).

6. A process according to Claim 1 or 3, wherein there are used 2—10 mols, preferably 2—4 mols, of alcohol per mol of an anthraquinone compound of the formula (2).

7. A process according to Claims 4 and 6, wherein the reaction with the alcohol is performed in the presence of 0.5—1 mol of a phenol per mol of an anthraquinone compound of the formula (2).

8. A process according to Claims 1—7, wherein the organic solvent used is a halobenzene, alkylbenzene or nitrobenzene, or a glycol ether.

9. A process according to Claim 8, wherein there is used: chlorobenzene, o-dichlorobenzene, nitrobenzene, toluene, xylene, diethylene glycol dimethyl ether or diethylene glycol diethyl ether.

10. A process according to any one of Claims 1—9, wherein the phase-transfer catalyst used is a quaternary ammonium or phosphonium compound of the formula (3)

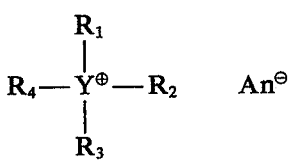

(3)

wherein $R_1-R_4$ independently of one another are each a low-or high-molecular organic radical, especially an unsubstituted or substituted alkyl, cycloalkyl or aryl group, Y is nitrogen or phosphorus, and $An^{\ominus}$ is an anion.

11. A process according to Claim 10, wherein there is used a quaternary ammonium compound of the formula (3) in which $R_1$, $R_2$ and $R_3$ independently of one another are each $C_1-C_{18}$-alkyl, and $R_4$ is $C_1-C_{18}$-alkyl, benzyl or phenyl.

12. A process according to Claim 11, wherein there is used a quaternary ammonium compound of the formula (3) in which $R_1$, $R_2$ and $R_3$ independently of one another are each $C_1-C_8$-alkyl, and $R_4$ is $C_1-C_{18}$-alkyl or benzyl.

13. A process according to Claim 12, wherein there is used: tetrabutylammonium bromide or -chloride, n-hexadecyltributylammonium chloride, tetrapropylammonium chloride, benzyltributylammonium bromide or -chloride or trioctylmethylammonium bromide or -chloride.

14. A process according to Claim 1, wherein 1-amino-2-chloro-4-hydroxyanthraquinone is reacted with 1—1.5 mols of phenol per mol of anthraquinone in a solvent selected from the group comprising:

chlorobenzene, o-dichlorobenzene, nitrobenzene, toluene, xylene, diethylene, glycol dimethyl ether or diethylene glycol diethyl ether, in the presence of tetrabutylammonium bromide or -chloride, n-hexadecyltributylammonium chloride, tetrapropylammonium chloride, benzyltributylammonium bromide or -chloride or trioctylmethyl-ammonium bromide or -chloride.

**Revendications**

1. Procédé de préparation de 1-amino-4-hydroxy-anthraquinones de formule 1

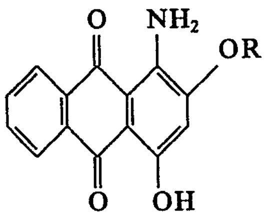

(1)

où R est un radical phényle éventuellement substitué par le chlore, le brome, un radical alkyle à 1 à 4 atomes de carbone ou alcoxy à 1 é 4 atomes de carbone, ou le résidu d'un alcool, par réaction d'un composé de formule 2

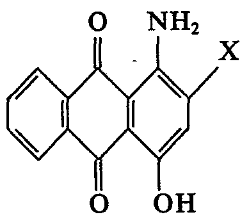

(2)

où X est le chlore ou le brome, sur un composé ROH, où R a la signification donnée ci-dessus, en présence d'une substance à effet alcalin, caractérisé en ce qu'on effectue la réaction dans un solvant organique en présence d'un sel d'ammonium quaternaire, d'un composé du phosphonium ou d'un éther-couronne en tant que catalyseur de transfert de phase.

2. Procédé selon la revendication 1, caractérisé en ce que l'on utilise en tant que phénol le phénol non substitué.

3. Procédé selon la revendication 1, caractérisé en ce que l'on utilise en tant qu'alcool l'hexanediol--1,6, l'éthylèneglycol, l'éther monométhylique du diéthylèneglycol, le phénoxyéthanol ou le méta- ou para-crésoxyéthanol.

4. Procédé selon les revendications 1 ou 3, caractérisé en ce que l'on effectue la réaction sur l'alcool en présence d'un phénol.

5. Procédé selon les revendications 1 ou 2, caractérisé en ce que l'on utilise 1—1,5 mole, de préférence 1,1—1,2 mole de phénol par mole de composé anthraquinone de formule (2).

6. Procédé selon les revendications 1 ou 3, caractérisé en ce que l'on utilise 2—10 moles, de préférence 2—4 moles d'alcool par mole de composé anthraquinone de formule (2).

7. Procédé selon les revendications 4 et 6, caractérisé en ce que l'on effectue la réaction sur l'alcool en présence de 0,5—1 mole d'un phénol par mole de composé anthraquinone de formule (2).

8. Procédé selon les revendications 1—7, caractérisé en ce que l'on utilise en tant que solvant organique un halogénobenzène, un alkylbenzène, un nitrobenzène ou un glycoléther.

9. Procédé selon la revendication 8, caractérisé en ce que utilise du chlorobenzène, ortho-dichlorobenzène, nitrobenzène, toluène, xylène, éther diméthylique du diéthylèneglycol ou éther diéthylique du diéthylèneglycol.

10. Procédé selon l'une des revendications 1—9, caractérisé en ce que l'on utilise en tant que catalyseur de transfert de phase un composé de l'ammonium ou du phosphonium quaternaire de formule (3)

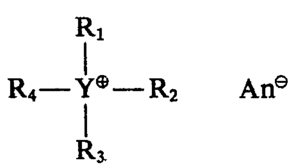

(3)

où $R_1$—$R_4$, indépendamment les uns des autres, sont chacun un radical organique à masse moléculaire basse ou élevée, en particulier un radical alkyle, cycloalkyle ou aryle éventuellement substitué, Y est l'azote ou le phosphore, et $An^{\ominus}$ est un anion.

11. Procédé selon la revendication 10, caractérisé en ce que l'on utilise un composé de l'ammonium quaternaire de formule (3) dans laquelle $R_1$, $R_2$ et $R_3$ sont chacun, indépendamment l'un de l'autre, un radical alkyle à 1 à 18 atomes de carbone, et $R_4$ est un radical alkyle à 1 à 18 atomes de carbone, benzyle ou phényle.

12. Procédé selon la revendication 11, caractérisé en ce que l'on utilise un composé d'ammonium quaternaire de formule (3), dans laquelle $R_1$, $R_2$ et $R_3$ sont chacun, indépendamment l'un de l'autre un radical alkyle à 1 à 8 atomes de carbone, et $R_4$ est un radical alkyle à 1 à 18 atomes de carbone ou benzyle.

13. Procédé selon la revendication 12, caractérisé en ce que l'on utilise du bromure ou chlorure de tétrabutylammonium, du chlorure de n-hexadécyltributylammonium, du chlorure de tétrapropylammonium, du bromure ou chlorure de benzyltributylammonium, ou du bromure ou chlorure de trioctylméthylammonium.

14. Procédé selon la revendication 1, caractérisé en ce que l'on fait réagir de la 1-amino-2-chloro-4-hydroxyanthraquinone sur 1—1,5 mole de phénol par mole d'anthraquinone, dans un solvant choisi parmi chlorobenzène, ortho-dichlorobenzène, nitrobenzène, toluène, xylène, éther, diméthylique du diéthylèneglycol ou éther diéthylique du diéthylèneglycol, en présence de bromure ou chlorure de tétrabutylammonium, de chlorure de n-hexadécyltributylammonium, de chlorure de tétrapropylammonium, de bromure ou chlorure de benzyltributylammonium ou de bromure ou chlorure de trioctylméthylammonium.